(19) Europäisches Patentamt
European Patent Office
Office européen des brevets

(11) EP 3 898 237 B1

(12) EUROPEAN PATENT SPECIFICATION

(45) Date of publication and mention of the grant of the patent:
**17.04.2024 Bulletin 2024/16**

(21) Application number: **19827737.8**

(22) Date of filing: **20.12.2019**

(51) International Patent Classification (IPC):
***B32B 27/32*** *(2006.01)* ***C08J 5/18*** *(2006.01)*
***C08K 5/00*** *(2006.01)* ***C08L 23/12*** *(2006.01)*
***B32B 15/085*** *(2006.01)* ***B32B 27/08*** *(2006.01)*
***B32B 27/18*** *(2006.01)*

(52) Cooperative Patent Classification (CPC):
(C-Sets available)
**C08L 23/12; B32B 15/085; B32B 27/08; B32B 27/18; B32B 27/32; C08J 5/18;**
B32B 2307/518; B32B 2457/16; C08J 2323/12; C08J 2423/12; C08K 5/0083; C08L 2203/20; C08L 2203/206; C08L 2205/24; C08L 2207/10

(Cont.)

(86) International application number:
**PCT/EP2019/086505**

(87) International publication number:
**WO 2020/127862 (25.06.2020 Gazette 2020/26)**

# (54) BIAXIALLY ORIENTED POLYPROPYLENE FILM WITH IMPROVED SURFACE PROPERTIES

BIAXIAL ORIENTIERTE POLYPROPYLENFOLIE MIT VERBESSERTEN OBERFLÄCHENEIGENSCHAFTEN

FILM EN POLYPROPYLÈNE ORIENTÉ DE MANIÈRE BI-AXIALE AYANT DES PROPRIÉTÉS DE SURFACE AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2018 EP 18214699**

(43) Date of publication of application:
**27.10.2021 Bulletin 2021/43**

(73) Proprietor: **Borealis AG**
**1020 Vienna (AT)**

(72) Inventors:
- **GLOGER, Dietrich**
  **4021 Linz (AT)**
- **BRAUN, Hermann**
  **4021 Linz (AT)**
- **GITSAS, Antonios**
  **4021 Linz (AT)**
- **TRANCHIDA, Davide**
  **4021 Linz (AT)**
- **JACOBS, Franciscus**
  **9940 Evergem (BE)**
- **STADLBAUER, Wolfram**
  **4021 Linz (AT)**

(74) Representative: **Maiwald GmbH**
**Elisenhof**
**Elisenstraße 3**
**80335 München (DE)**

(56) References cited:
**EP-A1- 1 894 716**
**EP-A1- 2 832 776**
**EP-A1- 2 995 641**
**EP-A1- 3 279 254**
**WO-A1-2017/064224**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/12;**
**C08L 23/12, C08L 23/12, C08L 23/18, C08K 5/3437**

## Description

The present invention is directed to a biaxially oriented polypropylene (BOPP) film with improved surface properties and to a capacitor comprising an insulation film comprising a layer of the biaxially oriented polypropylene film of the present invention. The present invention is further directed to a process for producing a biaxially oriented polypropylene film. Finally, the present invention is further directed to the use of a biaxially oriented polypropylene film of the present invention as layer of an insulation film of a capacitor.

Polypropylene is used in many applications and is for instance the material of choice in the field of film capacitors as its chain lacks any kind of polar groups which orient under electrical field stress. Various types of electric equipment contain inverters and accordingly demands have been growing for capacitors smaller in size and enhanced in capacitance. Because of these demands from the market, biaxially oriented polypropylene films which are thinner and improved in both mechanical properties and electrical properties are preferably used in the field of capacitor applications.

Capacitor films must withstand extreme conditions like high temperatures and must have high dielectrical breakdown field strength. Additionally, it is appreciated that capacitor films possess good mechanical properties like a high stiffness and also high operating temperatures. Many capacitor film grades, namely for power applications such as welding, e-vehicles, trains, ovens, windmills, solar panels etc, is using high isotactic polypropylene (HIPP) resins. Apart from balanced shrinkage and optimised surface roughness, the main advantage associated with the high isotacticity is the high heat resistance of the final film, relating to the high crystallinity, the high onset temperature of the melting and the high peak melting temperature. There are also capacitor film grades based on high isotactic polypropylene resins wherein the underlying polyolefin composition contains in addition long-chain branched polypropylene.

Dielectric breakdown occurs when the electrical field applied to an insulator exceeds the dielectric breakdown field strength of the insulator, and when a current spark breaks through the material, causing a short circuit.

In general, the phenomenon of dielectric breakdown as a physical process is not entirely understood, and correlations between structure of the insulator (morphology) and dielectric strength are not well established. The primary reason seems to be related to the fact that the breakdown event is the final result of several degradative processes on nano and microscopic scale, and this results in stochastic behaviour. Numerous factors influence final breakdown strength such as temperature, humidity, electrode metal, electrode geometry (shape, area), voltage raise rate, DC or AC voltage, surface roughness and thickness of the specimen. Moreover, depending on relative influence of the many factors for a given test, or for a given progress stage of the breakdown process, the breakdown can occur by several different mechanisms such as partial discharge in voids, thermal breakdown by hot spot formation and electromechanical breakdown, of which only one or all might occur in one measurement session.

EP 2 995 641 A1 discloses a polypropylene composition with improved processability and heat resistance for use in a capacitor film, in particular a biaxially oriented polypropylene film made thereof, wherein the polypropylene composition comprises a high isotactic propylene homopolymer, a long chain branched polypropylene, and a $\beta$-nucleating agent.

WO 2017/064224 A1 discloses biaxially oriented polypropylene films with improved electrical properties which are suitable for capacitors, wherein the underlying polypropylene composition comprises a high isotactic homopolymer of propylene and a polymeric $\alpha$-nucleating agent.

Academic research on surface properties of biaxially oriented polypropylene (BOPP) film and on application of BOPP films as capacitor film has been made.

- Fujiyama M. et al., Journal of Applied Polymer Science, 1988, 36, 995-1009, about BOPP surface structure by light microscopy.
- Nie H.Y., Walzak M.J., McIntyre N.S, Journal of Material Engineering and Performance, 2004, 13, 451-460 about BOPP surface structure by atomic force microscopy.
- Tamura S. et al., Journal of Applied Polymer Science, 2012, 124, 2725-2735, about BOPP surface crazing process in sequential mode.
- Nash J.L., Polymer Engineering and Science, 1988, 28, 826-870 about use of BOPP in thin film capacitors.
- Ho J., Low T.R., Boggs S., IEEE Electrical Insulation Magazine, 2010, 26, 20-26, about use of BOPP in thin film capacitors.

There is accordingly a need for providing films with improved surface properties which are suitable for capacitors.

It is therefore an object of the present invention to provide biaxially oriented polypropylene films suitable for capacitors with still improved surface properties and/or allowing for high throughput.

The present invention is based on the finding that the object can be solved by provision of a novel biaxially oriented polypropylene film comprising a polypropylene composition, wherein the polypropylene composition comprises a high isotactic polypropylene resin and at least one further component. The biaxially oriented polypropylene film according to the present invention has the advantage of having improved surface properties, i.e., is free of mechanical

failure sites.

The present invention is accordingly in one aspect directed to a biaxially oriented polypropylene film comprising a polypropylene composition, wherein the polypropylene composition comprises

(i) from 90 to 99.9 wt%, based on the total weight of the polypropylene composition, of a homopolymer of propylene having a content of isotactic pentad fraction of from 93 to 98 % and a melt flow rate $MFR_2$ of from 0.4 to 10 g/10 min, and either

(ii) from 0.0000001 to 1 wt%, based on the total weight of the polypropylene composition, of a polymeric $\alpha$-nucleating agent,

or

(iii) from 0.1 to 9.99 wt%, based on the total weight of the polypropylene composition, of a branched propylene polymer having a branching index g' of not more than 0.9, wherein the film is stretched simultaneously in machine direction and transverse direction in a continuous process, wherein the draw ratio in either transverse direction or machine direction is at least 8.0, and

wherein the biaxially oriented polypropylene film does not comprise mechanical failure sites as determined by scanning electron microscopy according to the present description, whereby the components (i) and (ii) or (iii) add up to 100 wt%.

Whereby the components (i) and (ii) or (iii) add up to 100 wt% in the sense of the invention may mean that the amount of the components (i) and (ii) or (iii) are selected in the given ranges so that they add up to 100 wt% of said components or of the composition.

In classic BOPP film production ("SEQ" for sequential) a primary cast sheet is biaxially drawn in a two-step draw process, first using a set of heated rolls to uniaxially draw the primary sheet in machine direction (MD), and then drawing this already oriented sheet a second time in transverse direction (TD) via a tenter frame installed in an oven. The just described process is commonly known as "tenter frame process", which tacitly refers to the sequential process mode ("SEQ") as described. Given the rather high local strain rates during MD drawing, combined with insufficient thermal activation, the MD draw step results in morphological damage by crazing (see Figures herein). In the prior art surface features created thereby are usually called "craters" or "protrusions", i.e., small band of polypropylene that protrudes from the BOPP film surface in a circular or ellipsoid fashion, resembling a crater rim. However, analysis by scanning electron microscopy (SEM) revealed mechanical failure sites at the base of these rims, i.e., crazes that penetrate several hundred nanometers, such as 1 $\mu$m, into the BOPP film (see Figures herein).

It is believed that surface properties of the BOPP films largely influence the suitability of the film for use as (part of) a capacitor film, i.e., that irregularities of the surface stimulate electrical breakdown. Accordingly, the crazes at the base of the rims of the craters or protrusions discussed above seem to be potential sites of dielectric failure.

The homopolymer of propylene (i) will in the following shortly referred to also as high isotactic homopolymer of propylene.

The expression homopolymer of propylene as used herein relates to a polypropylene that consists substantially, i.e., of at least 99.5 wt%, more preferably of at least 99.8 wt%, of propylene units. In a preferred embodiment only propylene units are detectable in the homopolymer of propylene. The comonomer content can be determined with $^{13}C$ NMR spectroscopy, as described below. Further, it is appreciated that the homopolymer of propylene is a linear polypropylene.

The feature that the biaxially oriented polypropylene film according to the present invention does not comprise mechanical failure sites as determined by scanning electron microscopy means for example that there is no detectable mechanical failure on a sample of the biaxially oriented polypropylene film according to the present invention observed by SEM as described below under 'Definitions/Measuring methods', preferably that there is no detectable mechanical failure on one, preferably two or three and/or four images of at least one sample from the chill roll side and/or the air knife side of the biaxially oriented polypropylene film each corresponding to an area of $10\times9.2$-$60\times55.2$ $\mu m^2$ observed by SEM, whereby further SEM samples are prepared as described below under 'Definitions/Measuring methods'. Mechanical failure sites in the sense of the present invention may especially be for example crazes at the base or edges of rims of surface features, such as for example craters and/or protrusions of the film. Such crazes may thereby for example especially penetrate several hundred nanometers, such as 1 $\mu$m, into the film.

The film may thereby have a thickness for example between 2 and 5, preferably > 2 and < 5 $\mu$m, preferably > 2 and 4.5 $\mu$m or 3 to 5 $\mu$m, preferably of 3.5 to 4.5 $\mu$m.

### High isotactic homopolymer of propylene

The high isotactic homopolymer of propylene (i) is the main constituent of the polypropylene composition. The polypropylene composition comprises from 90 to 99.9 wt%, preferably from 95 to 99.9 wt%, more preferably from 98 to 99.9 wt% and in particular from 99 to 99.9 wt% of the high isotactic homopolymer of propylene (i).

The high isotactic homopolymer of propylene (i) has a melt flow rate $MFR_2$ of from 0.4 to 10 g/10 min, preferably from 1 to 7 g/10 min. A too low MFR has a consequence of poor processability. On the other hand, a too high MFR has the consequence of sagging at the elevated temperatures used in the process of producing a biaxially oriented polypropylene film.

The high isotactic homopolymer of propylene (i) has a content of isotactic pentad fraction (mmmm-fraction) of from 93 to 98 %, preferably from 94 to 98 %, such as from 95 to 98 %. The content of the isotactic pentad fraction is calculated as the percentage of the mmmm-pentads from all the pentads. A too low content of isotactic pentad fraction has a consequence that the final crystallinity of the film becomes rather low, and the tensile properties and moduli of the film decrease. On the other hand, a too high content of isotactic pentad fraction has the consequence that there may be frequent film breaks during film orientation in machine direction and/or transverse direction.

The high isotactic homopolymer of propylene (i) preferably has an ash content of not more than 30 ppm, more preferably not more than 20 ppm and in particular not more than 15 ppm, such as not more than 10 ppm. Too high ash content could be detrimental for the dielectric properties of the film, especially if the ash contains metal residues. Such films cannot be used for making capacitors. The ash content of the high isotactic homopolymer of propylene (i) will be usually at least 1 ppm.

A process which is particularly effective in producing propylene homopolymers which are suitable for making the films of the present invention, e.g., the high isotactic homopolymer of propylene (i), is disclosed in EP-A-2543684, where a catalyst based on a solid component comprising titanium trichloride is used in combination with an aluminium alkyl, organic ether and an alkyl methacrylate.

The polymerisation is conveniently conducted in slurry. In such a process the catalyst, hydrogen and propylene monomer are contacted in a diluent comprising essentially one or more alkanes having from 4 to 15 carbon atoms, preferably from 10 to 14 carbon atoms. By "comprising essentially" is hereby meant that the diluent comprises at least 90 wt%, preferably at least 95 wt% and more preferably at least 99 wt% of one or more of such alkanes.

The polymerisation is typically conducted at a temperature of from 50 to 100 °C, preferably at 60 to 80 °C, and a pressure of from 1 to 50 bar, preferably from 3 to 15 bar.

Preferably, the process comprises one or more washing steps. Washing is typically conducted by contacting polymer slurry with a hydrocarbon diluent in one or more steps. After the contacting step the excess diluent is typically removed, for instance by centrifuging. Preferably the polymer slurry is contacted with the hydrocarbon diluent in at least two steps. When the washing includes multiple steps, it is preferred that in at least one step an alcohol or an ether is present in addition to the hydrocarbon diluent. This facilitates the removal of the catalyst components from the polymer and thereby a polymer with very low ash content can be obtained.

**Polymeric α-nucleating agent**

The polypropylene composition comprises - in one alternative - a polymeric α-nucleating agent (ii). The polymeric α-nucleating agent (ii) is a polymer of a vinyl compound of the formula $CH_2$=CH-$CHR^6R^7$, wherein $R^6$ and $R^7$ together form a 5- or 6-membered saturated, unsaturated, or aromatic ring, or independently represent an alkyl group comprising 1 to 4 carbon atoms. Preferably, the polymeric α-nucleating agent (ii) is a homopolymer of the vinyl compound of the formula $CH_2$=CH-$CHR^6R^7$.

The polypropylene composition comprises from 0.0000001 to 1 wt% of the polymeric α-nucleating agent (or, from 0.001 ppm to 10,000 ppm), preferably from 0.000001 to 0.01 wt% (or, from 0.01 ppm to 100 ppm), and especially preferably from 0.000001 to 0.005 wt% (or, from 0.01 ppm to 50 ppm) of the polymeric α-nucleating agent (ii). In particular, the polypropylene composition comprises from 0.000001 to 0.001 wt% (or, from 0.01 ppm to 10 ppm), and even more preferably from 0.000001 to 0.0005 wt% (or, from 0.01 ppm to 5 ppm) of the polymeric α-nucleating agent (ii), based on the total weight of the polypropylene composition.

One method for incorporating the polymeric α-nucleating agent (ii) into the polypropylene composition includes prepolymerising the polymerisation catalyst by contacting the catalyst with the vinyl compound of the formula $CH_2$=CH-$CHR^6R^7$, wherein $R^6$ and $R^7$ together form a 5- or 6-membered saturated, unsaturated, or aromatic ring, or independently represent an alkyl group comprising 1 to 4 carbon atoms. Propylene is then polymerised in the presence of such prepolymerised catalyst.

In the prepolymerisation the catalyst is prepolymerised so that it contains up to 5 grams of prepolymer per gram of solid catalyst component, preferably from 0.1 to 4 grams of prepolymer per gram of the solid catalyst component. Then, the catalyst is contacted at polymerisation conditions with the vinyl compound of the formula $CH_2$=CH-$CHR^6R^7$, wherein $R^6$ and $R^7$ are as defined above.

Especially preferably $R^6$ and $R^7$ are both methyl groups and the vinyl compound is accordingly 3-methyl-1-butene.

Especially preferably $R^6$ and $R^7$ form a saturated 5- or 6-membered ring. Especially preferably the vinyl compound is vinylcyclohexane.

Especially preferably the catalyst contains from 0.5 to 2 grams of the polymerised vinyl compound, such as poly(vinylcyclohexane), per gram of solid catalyst component.

Especially preferably the polymeric α-nucleating agent is selected from the group consisting of polyvinylcyclohexane, poly(3-methyl-1-butene) and mixtures thereof.

This approach allows the preparation of nucleated polypropylene as disclosed in EP-A-607703, EP-A-1028984, EP-A-1028985 and EP-A-1030878.

The polymeric α-nucleating agent according to the present invention is not a polymer of propylene.

Preferably, the prepolymerisation is conducted in slurry in an inert diluent at a temperature within the range of from 20 to 80 °C, preferably from 35 to 65 °C. The pressure is not critical and can be selected from an atmospheric pressure to 50 bar. The reaction time is selected so that the amount of unreacted vinyl compound is less than a predetermined limit, such as less than 2000 ppm of the reaction mixture, or less than 1000 ppm.

As described above, after prepolymerising the polymerisation catalyst, propylene is polymerised in the presence of such prepolymerised catalyst which approach allows the preparation of nucleated polypropylene.

Hence, according to one possible method the polypropylene composition is produced by homopolymerising propylene in the presence of such prepolymerised catalyst. The propylene homopolymer is thereby nucleated by the polymeric α-nucleating agent (ii). The polypropylene composition then preferably comprises from 0.1 to 200 ppm of the polymeric α-nucleating agent (ii), preferably poly(vinylcyclohexane), based on the total weight of the polypropylene composition. The polymerisation process and the catalyst are then suitably as described above. Thereby the high isotactic homopolymer of propylene (i) is formed on the catalyst containing the polymeric α-nucleating agent (ii).

Alternatively, and more preferably, the polypropylene composition is produced by homopolymerising propylene in the presence of a polymerisation catalyst which has not been prepolymerised with the vinyl compound as disclosed above, thereby producing the high isotactic homopolymer of propylene (i). In such a case the high isotactic homopolymer of propylene (i) is combined before or at the extrusion step with a further polymer, namely a propylene homo- or copolymer (iii) which has been produced by homopolymerising propylene, or copolymerising propylene and a comonomer, in the presence of a catalyst which has been prepolymerised with the vinyl compound as referred to above.

**Propylene homo- or copolymer**

Hence, according to a preferred embodiment of the present invention, the polypropylene composition comprises - in one alternative - in addition to the homopolymer of propylene (i) and the polymeric α-nucleating agent (ii)
(iii) up to 9.99 wt%, based on the total weight of the polypropylene composition, of a propylene homo- or copolymer other than the homopolymer of propylene (i), i.e. other than the high isotactic homopolymer of propylene (i).

The amount of the propylene homo- or copolymer (iii) will be usually at least 0.01 wt%, based on the total weight of the polypropylene composition.

As discussed above, the propylene homo- or copolymer (iii) is typically present as a carrier polymer for the polymeric α-nucleating agent (ii). The propylene homo- or copolymer (iii) preferably comprises from 0.5 to 200 ppm, preferably from 0.5 to 100 ppm, more preferably from 1 to 200 ppm, such as 1 to 100 ppm, of the polymeric α-nucleating agent (ii), preferably of poly(vinylcyclohexane), based on the weight of the propylene homo- or copolymer (iii).

The amount of the homo- or copolymer of propylene (iii) is preferably from 0.1 to 9.99 wt%, based on the polypropylene composition, preferably from 0.1 to 5 wt%, more preferably from 0.2 to 4.99 wt%, even more preferably from 0.2 to 1.99 wt%, and in particular from 0.2 to 0.99 wt%, based on the polypropylene composition.

The propylene homo- or copolymer (iii) may be any homo- or copolymer of propylene. Preferably, the homo- or copolymer (iii) is relatively similar to the high isotactic homopolymer of propylene (i). Thus, it is preferred that the homo- or copolymer (iii) is a homopolymer of propylene. Furthermore, if the properties of the homo- or copolymer (iii) are substantially different from those of the high isotactic homopolymer of propylene (i), it is preferred that the amount of the homo- or copolymer (iii) does not exceed 2 wt%, based on the total weight of the polypropylene composition.

The propylene homo- or copolymer (iii) preferably has a branching index g of at least 0.9. Thereby the propylene homo- or copolymer (iii) is preferably substantially free of long chain branches. Especially, the propylene homo- or copolymer (iii) does not contain long chain branches in a detectable amount.

The propylene homo- or copolymer (iii) can be produced according to the methods known in the art. As described above, according to one method the propylene homo- or copolymer (iii) is produced by homopolymerising propylene in the presence of a catalyst which is prepolymerised with a vinyl compound of the formula $CH_2=CH-CHR^6R^7$, wherein $R^6$ and $R^7$ are as defined above. It is particularly preferred that the vinyl compound is vinylcyclohexane. The propylene homo- or copolymer (iii) is thereby nucleated by the polymeric α-nucleating agent (ii). The propylene homo- or copolymer (iii) preferably comprises from 0.1 to 200 ppm of the polymeric α-nucleating agent (ii), preferably of poly(vinylcyclohexane), based on the total weight of the propylene homo- or copolymer (iii).

According to one suitable embodiment of the present invention, the polymerisation process and the catalyst for producing the propylene homo- or copolymer (iii) are similar to what is described above for the high isotactic homopolymer of propylene (i). Thereby the propylene homo- or copolymer (iii) is formed on the catalyst containing the polymeric α-nucleating agent (ii).

According to an especially preferred embodiment of the present invention, the propylene homo- or copolymer (iii) is produced by homopolymerising propylene, or copolymerising propylene and one or more comonomers selected from the group consisting of ethylene and alpha-olefins having from 4 to 8 carbon atoms, in the presence of a Ziegler-Natta catalyst comprising a solid component containing magnesium, titanium, chlorine, and of an internal donor, such as a phthalate, a maleate or a citraconate, and of an aluminium alkyl, such as triethylaluminium, and of an external donor, such as a silicon ether, for instance, dicyclopentyldimethoxysilane, which catalyst has been prepolymerised with a small amount of the vinyl compound of the formula $CH_2$=CH-CHR$^6$R$^7$, such as vinylcyclohexane.

Propylene is then homopolymerised or copolymerised in the presence of the prepolymerised catalyst in one or more polymerisation steps. The homo- or copolymerisation of propylene can be conducted in any suitable polymerisation process known in the art, such as in slurry polymerisation or in gas phase polymerisation or in a combination thereof.

Suitable processes for producing the propylene homo- or copolymer (iii) containing the polymeric α-nucleating agent (ii) are disclosed, among others, in WO-A-99/24479, WO-A-00/68315, EP-A-1801157, EP-A-1801155 and EP-A-1818365.

Typically, the propylene homo- or copolymer (iii) contains from 0.1 to 200 ppm of the polymeric α-nucleating agent (ii), preferably from 1 to 100 ppm, more preferably from 5 to 50 ppm of the polymeric α-nucleating agent (ii). Also in this embodiment it is preferred that the propylene homo- or copolymer (iii) is a propylene homopolymer, and it is further preferred that the propylene homopolymer has a relatively high content of isotactic material, as indicated, for instance, by a high percentage of cold xylene insoluble material, like at least 96 wt%, or at least 97 wt%, or at least 98 wt%.

**Branched Propylene Polymer**

The polypropylene composition comprises - in one alternative - from 0.1 to 9.99 wt%, based on the total weight of the polypropylene composition, of a branched propylene polymer (ii) having a branching index g' of not more than 0.9.

The branching index of the branched propylene polymer will be usually at least 0.1.

The term "branched propylene polymer" used in the present invention refers to a branched polypropylene differing from a linear polypropylene in that the polypropylene backbone has side chains whereas a non-branched polypropylene, i.e., a linear polypropylene, does not have side chains. The side chains have significant impact on the rheology of the polypropylene. Accordingly linear polypropylenes and branched polypropylenes can be clearly distinguished by its flow behaviour under stress.

The branching index g' defines the degree of branching and correlates with the amount of branches of a polymer. The branching index g' is defined as

$$g' = [IV]br/[IV]lin$$

in which g' is the branching index of the branched propylene polymer, [IV]br is the intrinsic viscosity of the branched propylene polymer, and [IV]lin is the intrinsic viscosity of a linear polypropylene having the same weight average molecular weight (within a range of ±10 %) as the branched propylene polymer. Thereby, a low g'-value is an indicator for a highly branched polymer. In other words, if the g'-value decreases, the branching of the polypropylene increases. Reference is made in this context to B.H. Zimm and W.H. Stockmeyer, J. Chem. Phys. 17,1301 (1949). The intrinsic viscosity needed for determining the branching index g' is measured according to DIN ISO 1628/1, October 1999 (in Decalin at 135 °C).

Branching can be achieved by using specific catalysts, i.e., specific single-site catalysts, or by chemical modification. Concerning the preparation of a branched propylene polymer obtained by the use of a specific catalyst reference is made to EP 1 892 264. With regard to a branched propylene polymer obtained by chemical modification it is referred to EP 0 879 830 A1. In such a case the branched propylene polymer is also called high melt strength polypropylene. The branched propylene polymer according to the present invention is obtained by chemical modification as described in more detail below and thus is a high melt strength polypropylene (HMS-PP). Therefore, the terms "branched propylene polymer" and "high melt strength polypropylene (HMS-PP)" can be regarded in the present invention as synonyms. An accordingly prepared branched propylene polymer is also known as long chain branched propylene polymer.

Therefore the branched propylene polymer, i.e. the high melt strength polypropylene (HMS-PP), of the present invention has a F30 melt strength of more than 15.0 cN and a v30 melt extensibility of more than 200 mm/s, preferably has a F30 melt strength in the range of 15.0 to 50.0 cN, more preferably 20.0 to 45.0 cN, like 25.0 to 40.0 cN, and a v30 melt extensibility in the range of 200 to 300 mm/s, preferably 215 to 285 mm/s, more preferably 235 to 275 mm/s in order to provide a resulting polypropylene composition with good strain hardening effect. The F30 melt strength and the v30 melt extensibility are measured according to ISO 16790:2005.

The branched propylene polymer can be produced by any number of processes, e.g., by treatment of the unmodified propylene polymer with thermally decomposing radical-forming agents and/or by treatment with ionizing radiation, where both treatments may optionally be accompanied or followed by a treatment with bi- or multifunctional ethylenically unsaturated monomers, e.g., butadiene, isoprene, dimethylbutadiene, divinylbenzene or trivinylbenzene.

"Bifunctional ethylenically unsaturated" as used herein means the presence of two nonaromatic double bonds, as in e.g., divinylbenzene or cyclopentadiene. Only such bifunctional ethylenically unsaturated compounds are used which can be polymerised with the aid of free radicals. The bifunctionally unsaturated monomer is in its chemically bound state not actually "unsaturated", because the two double bonds are each used for a covalent bond to the polymer chains of the linear polypropylene.

Examples of the branched propylene polymer, are in particular:

- polypropylenes modified by reaction with bismaleimido compounds in the melt (EP-A-0 574 801 and EP-A-0 574 804)
- polypropylenes modified by treatment with ionizing radiation (EP 0 190 889 A2)
- polypropylenes modified by treatment with peroxides in the solid phase (EP 0 384 431 A2) or in the melt (EP 0 142 724 A2),
- polypropylenes modified by treatment with bifunctional ethylenically unsaturated monomers under the action of ionizing radiation (EP A 0 678 527),
- polypropylenes modified by treatment with bifunctional ethylenically unsaturated monomers in the presence of peroxides in the melt (EP A 0 688 817 and EP A 0 450 342).

From the above list, those branched propylene polymers are preferred, which are obtained by treatment with peroxides, especially when followed by a treatment with bifunctional ethylenically unsaturated monomers.

A preferred branched propylene polymer is obtained by mixing a linear polypropylene with 0.01 to 3 wt% of an organic peroxide which is thermally decomposable under melting conditions of the polypropylene and heating and melting the mixture.

A still more preferred branched propylene polymer is obtained by mixing a linear polypropylene with 0.01 to 3 wt% of an organic peroxide which is thermally decomposable under melting conditions of the polypropylene and with from 0.2 to 3 wt% of a bifunctional ethylenically unsaturated monomer and heating and melting the mixture.

The bifunctional ethylenically unsaturated monomer may be added at any time before or during heating and melting the linear polypropylene/peroxide mixture. The bifunctional monomer may also be added to the linear polypropylene before it is mixed with the peroxide.

According to a preferred embodiment the bifunctional monomer is in gaseous or liquid state absorbed by the - still solid - polypropylene.

According to a preferred method, the branched propylene polymer is prepared by mixing a particulate linear propylene polymer with from 0.05 to 3 wt%, based on the linear propylene polymer, of an organic peroxide which is thermally decomposable under melting conditions of the polypropylene (acyl peroxides, alkyl peroxides, peresters and/or peroxycarbonates). The peroxides may optionally be solvatised in an inert solvent. Mixing is performed at temperatures of from 30 to 100 °C, preferably of from 60 to 90 °C.

Mixing with the peroxide(s) is followed by contacting the polypropylene/peroxide mixture with the bifunctional ethylenically unsaturated monomer(s). The bifunctional monomer may be in gaseous or liquid state and may be applied in pure or diluted form, e.g., diluted with an inert gas or solvatised in an organic solvent. The bifunctional monomer is allowed to be absorbed by the particulate polypropylene at a temperature of from 20 to 120 °C, preferably of from 60 to 100 °C. Practical sorption times are from 10 to 1000 s, 60 to 600 s being preferred. This typically results in an absorbed amount of bifunctional monomer of from 0.01 to 10 wt%, respectively from 0.05 to 2 wt%, based on the linear propylene polymer.

The polypropylene/peroxide/monomer mixture is then heated and melted in an atmosphere comprising inert gas, e.g., $N_2$, and/or the bifunctional monomer, from sorption temperature to 210 °C. This causes the peroxides to decompose and to generate free radicals at the propylene polymer chains which react with the bifunctional monomers.

The melt is heated up to 280 °C in order to remove unreacted monomers and decomposition products and finally the melt is pelletised.

The linear polypropylene comprises propylene homopolymers, copolymers of propylene and ethylene and/or $\alpha$-olefins with 4 to 18 carbon atoms and mixtures of such homo- and copolymers. According to a preferred embodiment of the present invention, the branched propylene polymer is prepared based on a propylene homopolymer with low ash content, preferably an ash content of < 60 ppm.

According to a still further preferred embodiment of the present invention, the branched propylene polymer (ii) is prepared based on a high isotactic homopolymer of propylene like the high isotactic homopolymer of propylene (i), the high isotactic homopolymer of propylene being linear.

The particulate linear propylene polymer may have the shape of powders, granules, or grit.

The above-described process preferably is a continuous method, performed in continuous reactors, mixers, kneaders and extruders. Batchwise production of the modified propylene polymer, however, is feasible as well.

Preferably the bifunctional monomers are absorbed by the linear propylene polymer from the gas phase.

The bifunctional ethylenically unsaturated monomers preferably are $C_4$ to $C_{10}$ dienes and/or $C_7$ to $C_{10}$ divinyl compounds. Especially preferred are butadiene, isoprene, dimethyl-butadiene or divinylbenzene.

The following peroxides are suitable for the above-described process:

- acyl peroxides, such as dibenzoyl peroxide, benzoyl peroxide, 4-chlorobenzoyl peroxide, 3-methoxybenzoyl peroxide and methylbenzoyl peroxide;
- alkyl peroxides such as allyl tert-butyl peroxide, 2,2-di(tert-butylperoxy)butane, di-tert-amyl peroxide, 1,1-bis(tert-butylperoxy)-3,3,5 trimethylcyclohexane, n-butyl-4,4-bis(tert-butylperoxy)valerate, diisopropylaminomethyl tert-amyl peroxide, dimethylaminomethyl tert-amyl peroxide, diethylaminomethyl tert-butyl peroxide, dimethylamino methyl tert-butyl peroxide, 1,1-di(tert-amylperoxy) cyclohexane, tert-amyl peroxide, tert-butyl cumyl peroxide, methyl isobutyl ketone peroxide, 2,2-di(4,4-di(tert-butylperoxy)cyclohexyl)propane, tert-butyl peroxide and 1-hydroxybutyl n-butyl peroxide;
- peresters and peroxycarbonates, such as tert-butyl peroxyacetate, tert-butyl peroxydiethylacetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebacate, 4-nitrocumyl perpropionate, 1-phenylethyl perbenzoate, phenylethyl nitroperbenzoate, tert-butyl bicyclo[2.2.1]heptane percarboxylate, tert-butyl 4-carbomethoxy perbutyrate, tert-amyl peroxy 2-ethylhexyl carbonate, tert-amyl peroxy-2-ethylhexanoate, tert-butyl cyclobutane percarboxylate, 1,4-di(tert-butylperoxycarbo)cyclohexane, 1,1-di(tert-butylperoxy)-3,3,5-trimethyl-cyclohexane, 1,1-di(tert-butylperoxy)cyclohexane, tert-butyl cyclohexylperoxycarboxylate, tert-butyl cyclopentylpercarboxylate, tert-butyl cyclopropanepercarboxylate, tert-butyl dimethylpercinnamate, tert-butyl 2-(2,2-diphenylvinyl)perbenzoate, tert-butyl peroxy-2-ethylhexanoate, tert-butyl peroxy-3,5,5-trimethylhexanoate, tert-butyl 4-methoxyperbenzoate, tert-butyl peroxybenzoate, tert-butyl pernaphthoate, tert-butylperoxy isopropyl carbonate, tert-butylperoxy 2-ethylhexyl carbonate, tert-butyl pertoluate, tert-butyl 1-phenylcyclopropyl percarboxylate, tert-butyl 2-propylperpenten-2-oate, tert-butyl 1-methylcyclopropylpercarboxylate, tert-butyl 4-nitrophenylperacetate, tert-butyl nitrophenyl peroxycarbamate, tert-butyl N-succinimido percarboxylate, tert-butyl percrotonate, tert-butylpermaleic acid, tert-butyl permethacrylate, tert-butyl peroctoate, tert-butyl peroxyisobutyrate, tert-butyl peracrylate, tert-butyl perpropionate;

and mixtures of these peroxides.

Particularly preferred are dibenzoyl peroxide, tert-butyl peroxy-2-ethylhexanoate, tert-amyl peroxy-2-ethylhexanoate, tert-butyl peroxydiethylacetate, 1,4-di(tert-butylperoxycarbo)cyclohexane, tert-butyl peroxyisobutyrate, 1,1-di(tert-butylperoxy)-3,3,5-trimethyl-cyclohexane, methyl isobutyl ketone peroxide, 2,2-di(4,4-di(tert-butylperoxy)cyclohexyl)propane, 1,1-di(tert-butylperoxy)cyclohexane, tert-butyl peroxy-3,5,5-trimethylhexanoate, tert-amyl peroxy 2-ethylhexyl carbonate, 2,2-di(tert-butylperoxy)butane, tert-butylperoxy isopropyl carbonate, tert-butylperoxy 2-ethylhexyl carbonate, tert-butyl peroxyacetate, tert-butyl peroxybenzoate, di-tert-amyl peroxide and mixtures thereof.

These peroxides are preferred, because their mode of action was observed to be a compromise between polymer-chain-length-reducing degradation, which is undesirable in this instance, and the desired long chain branching.

### β-nucleating agent

According to a preferred embodiment of the present invention, the polypropylene composition comprises - in one alternative - in addition to the homopolymer of propylene (i) and the branched propylene polymer (ii) (iii) up to 0.00001 wt%, based on the total weight of the polypropylene composition of a β-nucleating agent.

The amount of the β-nucleating agent (iii) will be usually at least 0.0000001 wt%, based on the total weight of the polypropylene composition.

The term "β -nucleating agent" refers to any nucleating agent which is suitable for inducing crystallisation of propylene polymers in the hexagonal or pseudohexagonal modification. Mixtures of such nucleating agents may also be employed.

Suitable types of β-nucleating agents are

dicarboxylic acid derivative type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, e.g. *N*,*N'*-di-$C_5$-$C_8$-cy-cloalkyl-2,6-naphthalene dicarboxamide compounds such as *N*,*N'*-dicyclohexyl-2,6-naphthalene dicarboxamide and *N*,*N'*-dicyclooctyl-2,6-naphthalene dicarboxamide, *N*,*N'*-di-$C_5$-$C_8$-cycloalkyl-4,4-biphenyldicarboxamide compounds such as *N*,*N'*-dicyclohexyl-4,4-biphenyldicarboxamide and *N*,*N'*-dicyclopentyl-4,4-biphenyldicarboxamide, *N*,*N'*-di-$C_5$-$C_8$-cycloalkyl-terephthalamide compounds such as *N*,*N'*-dicyclohexylterephthalamide and *N*,*N'*-dicy-

clopentylterephthalamide, *N,N'*-di-$C_5$-$C_8$-cycloalkyl-1,4-cyclohexanedicarboxamide compounds such as *N,N'*-dicyclo-hexyl-1,4-cyclohexanedicarboxamide and *N,N'*-dicyclohexyl-1,4-cyclopentanedicarboxamide,

diamine derivative type diamide compounds from Cs-Cs-cycloalkyl monocarboxylic acids or $C_6$-$C_{12}$-aromatic monocarboxylic acids and Cs-Cs-cycloaliphatic or $C_6$-$C_{12}$-aromatic diamines, e.g. *N,N'*-$C_6$-$C_{12}$-arylene-bis-benzamide compounds such as *N,N'*-p-phenylene-bis-benzamide and *N,N'*-1,5-naphthalene-bis-benzamide, *N,N'*-$C_5$-$C_8$-cycloalkyl-bis-benzamide compounds such as *N,N'*-1,4-cyclopentane-bis-benzamide and N,N'-1,4-cyclohexane-bis-benzamide, *N,N'*-p-$C_6$-$C_{12}$-arylene-bis-$C_5$-$C_8$-cycloalkylcarboxamide compounds such as *N,N'*-1,5-naphthalene-bis-cyclohexanecarboxamide and *N,N'*-1,4-phenylene-bis-cyclohexanecarboxamide, and *N,N'*-$C_5$-$C_8$-cycloalkyl-bis-cyclohexanecarboxamide compounds such as *N,N'*-1,4-cyclopentane-bis-cyclohexanecarboxamide and *N,N'*-1,4-cyclohexane-bis-cyclohexanecarboxamide,

amino acid derivative type diamide compounds from amidation reaction of $C_5$-$C_8$-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and Cs-Cs-alkyl-, $C_5$-$C_8$-cycloalkyl- or $C_6$-$C_{12}$-aromatic mono-amines, e.g. *N*-phenyl-5-(*N*-benzoylamino)pentane amide and *N*-cyclohexyl-4-(*N*-cyclohexyl-carbonylamino)benzamide.

Further suitable β-nucleating agents are

quinacridone type compounds, e.g. 5,12-dihydro-quino[2,3-b]acridine-7,14-dione (i.e. quinacridone), dimethylquinacridone and dimethoxyquinacridone,

quinacridonequinone type compounds, e.g. quino[2,3-*b*]acridine-6,7,13,14(5H,12H)-tetrone (i.e. quinacridonequinone), and dimethoxyquinacridonequinone and dihydroquinacridone type compounds, e.g. 5,6,12,13-tetrahydroquino[2,3-*b*]acridine-7,14-dione (i.e. a dihydroquinacridone), dimethoxydihydroquinacridone and dibenzodihydroquinacridone.

Still further suitable β-nucleating agents are dicarboxylic acid salts of metals from group IIa of periodic table, e.g., pimelic acid calcium salt and suberic acid calcium salt; and mixtures of dicarboxylic acids and salts of metals from group IIa of the periodic table.

Still further suitable β-nucleating agents are salts of metals from group IIa of periodic system and imido acids of the formula

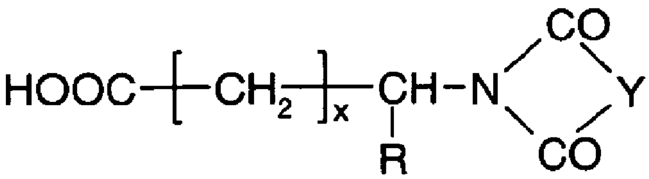

wherein x = 0 to 4; R = H, -COOH, $C_1$-$C_{12}$-alkyl, Cs-Cs-cycloalkyl or $C_6$-$C_{12}$-aryl, and Y = $C_1$-$C_{12}$-alkyl, Cs-Cs-cycloalkyl or $C_6$-$C_{12}$-aryl - substituted bivalent $C_6$-$C_{12}$-aromatic residues, e.g.

calcium salts of phthaloylglycine, hexahydrophthaloylglycine, N-phthaloylalanine, phthalimidoacetate and/or N-4-methylphthaloylglycine.

Preferred β-nucleating agents are any one or mixtures of N,N'-dicyclohexyl-2,6-naphtalene dicarboxamide, the β-nucleating agents of EP 177961 and those of EP 682066. Particularly preferred β-nucleating agents are any one or mixtures of 5,12-dihydro-quino[2,3-*b*]acridine-7,14-dione (CAS 1047-16-1) (i.e. quinacridone), quino[2,3-*b*]acridine-6,7,13,14(5H,12H)-tetrone (CAS 1503-48-6) (i.e. quinacridonequinone), 5,6,12,13-tetrahydroquino[2,3-*b*]acridine-7,14-dione (CAS 5862-38-4) (i.e. a dihydroquinacridone), *N,N'*-dicyclohexyl-2,6-naphtalene dicarboxamide (CAS 153250-52-3) and salts of dicarboxylic acids with at least 7 carbon atoms with metals of group IIa of the periodic table, preferably calcium pimelate (CAS 19455-79-9).

A still more preferred β-nucleating agent is a mixture of 5,12-dihydro-quino[2,3-*b*]acridine-7,14-dione (CAS 1047-16-1), quino[2,3-*b*]acridine-6,7,13,14(5H,12H)-tetrone (CAS 1503-48-6) and 5,6,12,13-tetrahydroquino[2,3-b]acridine-7,14-dione (CAS 5862-38-4), which is commercially available as Cinquasia Gold YT-923-D from BASF.

This β-nucleating agent is characterised by very high activity. Cinquasia Gold YT-923-D is preferred as β-nucleating agent because it has a very high activity and is very inexpensive.

## Conventional additives

According to a preferred embodiment of the present invention, the polypropylene composition further comprises

(iv) from 0.01 to 1 wt%, preferably from 0.05 to 0.8 wt%, based on the total weight of the polypropylene composition, of conventional additives.

Hence, the polypropylene composition preferably comprises one or more conventional additives (iv). The conventional additives (iv) used according to the present invention are preferably selected from the group consisting of antioxidants, stabilisers, acid scavengers, and mixtures thereof.

The high isotactic homopolymer of propylene (i) according to the present invention has an isotacticity of from 93 to 98 %. It has been found that especially when homopolymers of propylene having an isotacticity of from 95 to 98 % are used in making films, the polymer is more prone to degradation than a conventional homopolymer of propylene having an isotacticity of from 90 to 94 %. Therefore, more effective stabilisation is preferred for the high isotactic homopolymer of propylene (i).

The antioxidants and stabilisers used in the present invention are preferably selected from the group of hindered phenols and more preferably from the group of hindered phenols not containing phosphorous or sulphur.

The antioxidants and stabilisers used in the present invention are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythrityl-tetrakis(3-(3',5'-di-tert. butyl-4-hydroxyphenyl)-propionate (sold under trade names Irganox 1010, Anox 20, Ethanox 310TF and Kinox-10), octadecyl 3-(3',5'-di-tert. butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert. butyl-4'-hydroxybenzyl)-isocyanurate (sold under trade names Irganox 3114, Anox IC-14, Ethanox 314 and Kinox-34), and 2,5,7,8-tetramethyl-2(4',8',12'-trimethyltridecyl)chroman-6-ol (sold under trade names Irganox E 210 and alpha-tocopherol).

The antioxidants and stabilisers are preferably present in a total amount of from 500 to 8000 ppm, based on the total weight of the polypropylene composition. More preferably, antioxidants and stabilisers are present in a total amount of from 800 to 7000 ppm, still more preferably of from 1000 to 6000 ppm, and in particular from 1500 to 6000 ppm, based on the total weight of the polypropylene composition.

In particular, the antioxidants and stabilisers preferably do not contain phosphorous containing secondary antioxidants, such as tris(2,4-ditert-butylphenyl)phosphite, because such compounds increase the dissipation in the final capacitor.

Acid scavengers are typically salts of organic acids, such as stearates. They have the function of neutralising acids in polymer. Examples of such compounds are calcium stearate, zinc stearate and zinc oxide. Acid scavengers are typically used in an amount of from 50 ppm to 2000 ppm, more preferably from 50 ppm to 1000 ppm.

**Polypropylene composition**

The polypropylene composition comprises from 90 to 99.9 wt%, preferably from 93 to 99.9 wt%, more preferably from 95 to 99.9 wt%, and in particular from 99 to 99.9 wt% of the high isotactic homopolymer of propylene (i).

In addition to the high isotactic homopolymer of propylene (i) the polypropylene composition comprises - according to one alternative - from 0.0000001 to 1 wt% of a polymeric $\alpha$-nucleating agent (ii) and preferably from 0.01 to 1.0 wt% of conventional additives (iv).

Optionally and preferably according to this alternative, the polypropylene composition comprises up to 9.99 wt% of a propylene homo- or copolymer (iii) other than (i). When present, the propylene homo- or copolymer (iii) preferably comprises the polymeric $\alpha$-nucleating agent in an amount of from 0.1 to 200 ppm, preferably from 0.5 to 100 ppm, and in particular from 1 to 50 ppm, based on the weight of the propylene homo- or copolymer (iii). The amount of the propylene homo- or copolymer (iii) containing the polymeric $\alpha$-nucleating agent (ii) is then preferably from 0.1 to 10 wt%, more preferably from 0.1 to 5 wt%, and in particular from 0.1 to 1 wt%.

Preferably according to this alternative, the polypropylene composition comprises only linear polypropylene. Thereby, the high isotactic homopolymer of propylene (i) and the propylene homo- or copolymer (iii) do not contain long chain branches. Furthermore, in this connection preferably no further polymer containing long chain branches is added to the polypropylene composition.

Preferably according to this alternative, the polypropylene composition consists of the high isotactic homopolymer of propylene (i) and the polymeric $\alpha$-nucleating agent (ii), or the polypropylene composition consists of the high isotactic homopolymer of propylene (i), the polymeric $\alpha$-nucleating agent (ii), and the conventional additives (iv), or the polypropylene composition consists of the high isotactic homopolymer of propylene (i), the polymeric $\alpha$-nucleating agent (ii), the propylene homo- or copolymer (iii), and the conventional additives (iv), in each case with the amounts given above.

According to an especially preferred embodiment of this alternative the polypropylene composition comprises, preferably consists of, from 95 to 99.9 wt% of the high isotactic homopolymer of propylene (i), from 0.1 to 5 wt% of the propylene homo- or copolymer (iii) containing the polymeric $\alpha$-nucleating agent (ii) in an amount of from 0.5 to 100 ppm of the weight of the propylene homo- or copolymer (iii), and from 0.05 to 0.8 wt% of conventional additives (iv).

According to an even more preferred embodiment of this alternative the polypropylene composition comprises,

preferably consists of, from 98.2 to 99.8 wt% of the high isotactic homopolymer of propylene (i), from 0.1 to 1 wt% of the propylene homo- or copolymer (iii) containing the polymeric α-nucleating agent (ii) in an amount of from 0.5 to 100 ppm, or more preferably from 1 to 50 ppm, of the weight of the propylene homo- or copolymer (iii), and from 0.1 to 0.8 wt% of conventional additives (iv).

In addition to the high isotactic homopolymer of propylene (i) the polypropylene composition comprises - according to one alternative - from 0.1 to 9.99 wt% of a branched propylene polymer having a branching index g' of not more than 0.9 (ii) and preferably from 0.01 to 1.0 wt% of conventional additives (iv).

Optionally and preferably according to this alternative, the polypropylene composition comprises up to 0.00001 wt% of a β-nucleating agent (iii).

Preferably according to this alternative, the polypropylene composition consists of the high isotactic homopolymer of propylene (i) and the branched propylene polymer (ii), or the polypropylene composition consists of the high isotactic homopolymer of propylene (i), the branched propylene polymer (ii), and the conventional additives (iv), or the polypropylene composition consists of the high isotactic homopolymer of propylene (i), the branched propylene polymer (ii), the β-nucleating agent (iii), and the conventional additives (iv), in each case with the amounts given above.

The polypropylene composition preferably has a melt flow rate $MFR_2$ of from 0.5 to 10 g/10 min, preferably from 1 to 7 g/10 min.

**Biaxially oriented polypropylene (BOPP) film**

The biaxially oriented polypropylene film according to the present invention does not comprise mechanical failure sites as determined by scanning electron microscopy.

The biaxially oriented polypropylene film according to the present invention comprises the polypropylene composition as in detail described above, i.e., the biaxially oriented polypropylene film according to the present invention comprises at least one layer comprising the polypropylene composition as in detail described above and the biaxially oriented polypropylene film according to the present invention is stretched simultaneously in machine direction and transverse direction. In addition the film may also include further layers, such as metal layers in case the film is metallised.

Preferably the layer comprising the polypropylene composition contains from 90 to 100 wt% of the polypropylene composition, based on the total weight of the film layer. More preferably, the layer contains from 95 to 100 wt% of the polypropylene composition and even more preferably from 98 to 100 wt%, such as 99 to 100 wt%. Especially preferably, the film layer consists of the polypropylene composition.

As described above, the film may include additional layers. It is thus possible that the film comprises another layer comprising, for instance, the high isotactic homopolymer of propylene (i). The film may also include a metal layer. Metal layers are present especially if the film is used for making capacitors.

Eventual additional polymer layers may be produced by any means known in the art. Thus, they may be, and they preferably are, coextruded with the film layer according to the present invention. Alternatively, they may be laminated to form the film structure.

The film may also contain, and it preferably contains, a metal layer. The metal layer can be deposited to the film surface in any manner known in the art, such as by electric smelting vacuum deposition, by ion beam vacuum deposition, by sputtering or by ion plating. The thickness of such metal layer is typically from 100 Å (0.01 μm) to 5000 Å (0.5 μm).

The thickness of the BOPP film is typically from 0.5 to 10 μm or 1 to 10 μm, preferably from 1 to 6 μm, such as 1 to 3 μm.

The biaxially oriented polypropylene film according to the present invention is obtained by orienting the film simultaneously in the machine direction and in the transverse direction in a continuous process.

A BOPP film according to the present invention can be prepared by a process as in more detail described below.

**Capacitor**

The present invention is according to a further aspect directed to a capacitor comprising an insulation film comprising a layer of the biaxially oriented polypropylene film as in detail described above.

**Process for producing a biaxially oriented polypropylene film**

The present invention is according to a further aspect directed to a process for producing a biaxially oriented polypropylene film in a continuous process comprising the steps of:

(A) providing a polypropylene composition comprising

(i) from 90 to 99.9 wt%, based on the total weight of the polypropylene composition, of a homopolymer of propylene having a content of isotactic pentad fraction of from 93 to 98 % and a melt flow rate $MFR_2$ of from 0.4 to 10 g/10 min,
and either
(ii) from 0.0000001 to 1 wt%, based on the total weight of the polypropylene composition, of a polymeric α-nucleating agent,
or
(ii) from 0.1 to 9.99 wt%, based on the total weight of the polypropylene composition, of a branched propylene polymer having a branching index g' of not more than 0.9,

(B) extruding the polypropylene composition to a flat film,
(C) orienting the flat film simultaneously in the machine direction and in the transverse direction in a continuous process, wherein the draw ratio in either transverse direction or machine direction is at least 8.0, to obtain the biaxially oriented polypropylene film, and
(D) recovering the biaxially oriented polypropylene film.

According to a preferred embodiment of the process for producing a biaxially oriented polypropylene film according to the present invention, the polypropylene composition comprises in addition to the homopolymer of propylene (i)

(ii) from 0.0000001 to 1 wt%, based on the total weight of the polypropylene composition, of a polymeric α-nucleating agent,
and
(iii) up to 9.99 wt%, based on the total weight of the polypropylene composition, of a propylene homo- or copolymer other than the homopolymer of propylene (i),
or
(ii) from 0.1 to 9.99 wt%, based on the total weight of the polypropylene composition, of a branched propylene polymer having a branching index g' of not more than 0.9,
and
(iii) up to 0.00001 wt%, based on the total weight of the polypropylene composition, of a β-nucleating agent.

According to a preferred embodiment of the process for producing a biaxially oriented polypropylene film according to the present invention, the polypropylene composition further comprises
(iv) from 0.01 to 1 wt%, based on the total weight of the polypropylene composition, of conventional additives.

As regards the polypropylene composition and its (optional) ingredients, i.e., either the high isotactic homopolymer of propylene (i), the polymeric α-nucleating agent (ii), the propylene homo- or copolymer (iii), and the conventional additives (iv), or the high isotactic homopolymer of propylene (i), the branched propylene polymer (ii), the β-nucleating agent (iii), and the conventional additives (iv), it is referred to the detailed description provided above in connection with the aspect of the present invention directed to a biaxially oriented polypropylene film comprising the polypropylene composition.

In the process for producing a biaxially oriented polypropylene film according to the present invention, the simultaneous orientation of the flat film in the machine direction and in the transverse direction to obtain the biaxially oriented polypropylene film is conducted in a continuous process, preferably with a throughput of 20 kg/h to 900 kg/h, further preferred > 25 kg/h to 500 kg/h. A continuous process according to the invention may thereby be any process that produces product without interruption when running properly and/or does not produce products in batches. A continuous process in the sense of the present invention may thus be seen especially in opposition to a batch process (an example of a batch process may thereby especially be a process carried out with a Brückner Karo IV laboratory stretcher).

According to a preferred embodiment of the process for producing a biaxially oriented polypropylene film according to the present invention, the biaxially oriented polypropylene film does not comprise mechanical failure sites as determined by scanning electron microscopy.

According to one suitable method a non-oriented film is obtained by extrusion of the polypropylene composition through a flat die and the extrudate is collected and cooled with a rotating chill roll so that the film solidifies.

The chill roll continuously transports the non-oriented film into a tenter frame installed in an oven. The tenter frame is realized by two rails on which clips move in machine direction, driven by a linear motor system. The two rails from entrance to exit of the oven have parallel, diverging and slightly converging mutual arrangement to form a pre-heat, draw and relaxation zone. The biaxial drawing of the non-oriented cast film is accomplished by feeding the non-oriented cast film into the pre-heat zone of the tenter where, at the entrance, the clamps grab the non-oriented cast film on both sides. The movement direction of the clamps is in extrusion, i.e., machine direction (MD), and the clip-to-clip distance in MD is constant in the pre-heat zone. The rail-to-rail distance in the draw zone increases relative to the pre-heat zone

to accomplish the transverse direction (TD) drawing of the non-oriented cast film. Simultaneously, the clip-to-clip distance increases in MD to accomplish the MD drawing of the un-oriented cast film, while being oriented in TD. The draw ratio in either TD or MD is at least 8.0, preferably > 8.0 to 20.0, further preferred 9.0 to 15.0.

For instance, the melt is first extruded through the die to a chill roll. The chill roll surface temperature is held between 10 to 100 °C, preferably from 20 to 98 °C. The thickness of the sheet is from 50 to 1000 μm, preferably from 100 to 500 μm.

The film is then passed to the tenter frame and drawn as described above. The tenter oven temperature is set to a temperature between 160 and 175 °C.

The biaxially oriented film is collected on a mandrel before which it is trimmed at both sides to remove the non-oriented edges where the clips held the film.

**Use of BOPP film as layer of an insulation film of a capacitor**

The present invention is according to a further aspect directed to the use of a biaxially oriented polypropylene film of the present invention as in detail described above as layer of an insulation film of a capacitor.

It is believed that the particular good surface properties of the biaxially oriented polypropylene film of the present invention is the result of the particular polypropylene composition and the simultaneous orientation of the film, conducted in a continuous process.

In the following the present invention is further illustrated by means of examples.

**EXAMPLES**

**1. Definitions/Measuring Methods**

The following definitions of terms and determination methods apply for the above general description of the invention as well as to the below examples unless otherwise defined.

**Melt flow rate**

Melt flow rate $MFR_2$ was determined according to ISO 1133 at 230 °C under a load of 2.16 kg.

**Quantification of microstructure by NMR spectroscopy**

Quantitative nuclear magnetic resonance (NMR) spectroscopy was used to quantify the isotacticity and regio-regularity of the propylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics.

Approximately 200 mg of material (propylene homopolymer) was dissolved in 1,2-tetrachloroethane-d2 (TCE-d2). To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, 15 B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

By pentad isotacticity is meant the fraction of isotactic pentads (mmmm).

**Melt strength and melt extensibility**

The test described herein follows ISO 16790:2005.

The strain hardening behaviour is determined by the method as described in the article "Rheotens-Mastercurves and Drawability of Polymer Melts", M. H. Wagner, Polymer Engineering and Sience, Vol. 36, pages 925 to 935. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). The materials were extruded with a lab extruder HAAKE Polylab system and a gear pump with cylindrical die (LID = 6.0/2.0 mm). For measuring F30 melt strength and v30 melt extensibility, the pressure at the extruder exit (= gear pump entry) is set to 30 bars by by-passing a part of the extruded polymer. For measuring F200 melt strength and v200 melt extensibility, the pressure at the extruder exit (= gear pump entry) is set to 200 bars by by-passing a part of the extruded polymer.

The gear pump was pre-adjusted to a strand extrusion rate of 5 mm/s, and the melt temperature was set to 200 °C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec2. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the F30 melt strength and v30 melt extensibilty values, or the F200 melt strength and v200 melt extensibilty values, respectively.

**Intrinsic viscosity**

The intrinsic viscosity needed for determining the branching index g' is measured according to DIN ISO 1628/1, October 1999 (in Decalin at 135 °C).

**Polydispersity index, PI**

Dynamic rheological measurements were carried out with Rheometrics RDA-II QC on compression moulded samples under nitrogen atmosphere at 200 °C using 25 mm-diameter plate and plate geometry. The oscillatory shear experiments were done within the linear viscoelastic range of strain at frequencies from 0.01 to 500 rad/s according to ISO 6721-10. The values of storage modulus (G'), loss modulus (G"), complex modulus (G*) and complex viscosity ($\eta$*) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

$$\eta' = G'' / \omega \quad \text{and} \quad \eta'' = G' / \omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

PI = $10^5/G_c$, is calculated from the cross-over point of G'(ω) and G"( ω), for which G'($\omega_c$) = G"($\omega_c$) = $G_c$ holds.

**Melting temperature $T_m$, crystallization temperature $T_c$**

Differential Scanning Calorimetry (DSC) experiments were run on a TA Instruments Q2000 device calibrated with Indium, Zinc, Tin according to ISO 11357/1. The measurements were run under nitrogen atmosphere (50 mL min-1) on 5±0.5 mg samples in a heat/cool/heat cycle with a scan rate of 10 °C/min between -30 °C and 225 °C according to ISO 11357/3. Melting (Tm) and crystallisation (Tc) temperatures were taken as the peaks of the endotherms and exotherms in the cooling cycle and the second heating cycle respectively.

Ash content

The ash content of the polymer was determined by combusting the polymer in a weighed platinum crucible. About 100 grams of polymer is weighed into the crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

Scanning Electron Microscopy (SEM)

Scanning Electron Microscopy (SEM) was performed using a FEI Quanta 200F microscope. The films were sputtered with Au/Pd in a Polaron sputter coater operated at 2.2kV and current inside the plasma below 5mA for 60s. At least one samples from both air knife and/or chill roll side of the BOPP film, with size of approx. $2\times 2cm^2$ was cut out at a random position of the film and analysed in different areas, preferably one, two, three and/or four different areas, searching for defects, typically with settings of 2kV acceleration voltage, 2.5 spot size, and using an ETD detector. One, preferably two, three or four images was/were collected and analysed on each sample with 1024×943 pixels$^2$, at magnifications in the range of 5000×-30000× which corresponds to area size of 10×9.2 - 60×55.2 $\mu m^2$.

2. Examples

The following materials and compounds are used in the Examples.

| | |
|---|---|
| iHPP | high isotactic homopolymer of propylene, produced according to Reference Example 1 of WO 2017/064224 |
| nPP | nucleated propylene homopolymer, produced according to Reference Example 3 of WO 2017/064224 |
| HMS | high melt strength polypropylene, a branched propylene polymer, produced according to Reference Example 4 of WO 2017/064224 |

The β-nucleating agent used in the examples is commercially available β-nucleating agent Quinacridonequinone CGNA-7588 from BASF.

Pentaerythrityl-tetrakis(3-(3',5'-di-tert. butyl-4-hydroxyphenyl)-propionate, commercially available as Irganox 1010 from BASF.

One polypropylene composition of the inventive examples is a melt blend of 99.5 wt% of iHPP and 0.5 wt% of the nPP, in the following referred to as iHPP/α.

Another polypropylene composition of the inventive examples is a melt blend of 98.9 wt% of iHPP, 1.0 wt% of the HMS, and 0.0001 wt% (1 ppm) of the β-nucleating agent, in the following referred to as iHPP-HMS/β.

The polypropylene compositions were processed using the pilot scale biaxial orientation line owned and operated by Brückner Maschinenbau GmbH. Films were extruded at a rate of 35 kg/h onto a chill roll held at 90 °C into sheet of 240 μm thick with chill roll/film speed of 10 m/min. The film was fed at 10 m/min into a tenter frame applying the LISIM® technology, a proprietary technology of Brückner Maschinenbau GmbH. The film was then conveyed continuously through the tenter frame and oven, i.e. at a MD speed of 10 m/min through the pre-heat zone held at 160-170 °C, then conveyed through the draw zone held at 165-175 °C for TD and MD drawing, the former by the TD widening of the frame, the latter by accelerating the clips in MD to the end MD speed of 60 m/min. The relaxation zone of the tenter was held at the same temperature as the draw zone. The engineering draw ratio in MD and TD was 6.5 by 9.0.

For comparison, also sequential orientation to obtain a BOPP film was applied which was done on the same BOPP line as the LISIM® process including a MDO (machine direction orientation) unit installed between the cast film extrusion and the tenter frame. Films were extruded at a rate of 35 kg/h onto a chill roll held at 90 °C into sheet of 240 μm thick with chill roll/film speed of 10 m/min. This cast film was continuously fed into the MDO unit which consisted of 12 rolls, of which the first six were heated from 95 to 130 °C to pre-heat the film, the subsequent two were held at 140

°C for drawing and the last four are held between 110-124 °C for annealing. The MD draw step was accomplished between the $8^{th}$ and $9^{th}$ roll, running rolls 9 to 12 at 50 m/min thereby creating the MDO or MD drawn film. The MDO film was continuously fed into the tenter frame using 180-175 °C for preheating, 175-165 °C for drawing and 165-170 °C for relaxation. In the tenter operation, the MD clip-to-clip distance was constant and the MDO film was only drawn in TD in the diverging draw zone of the tenter. The engineering draw ratio in MD and TD was 5.0 by 9.0.

The obtained BOPP films are in the following referred to as "SIM" for simultaneous orientation, and "SEQ" for sequential orientation, e.g. "SIM6.5×9.0" for a draw ratio of 6.5 in machine direction and a draw ratio of 9.0 in transverse direction.

All tested BOPP films had a thickness of about 3.8 μm. This thickness is obtained by providing (non-oriented) flat films with different thicknesses and accordingly applying different draw ratios, varying also machine direction (MD) and transverse direction (TD), to obtain BOPP films with the desired thickness of 3.8 μm.

Table 1 shows some properties of the polypropylene compositions used herein.

Table 2 shows process conditions of preparation of BOPP films and the thickness of the films obtained.

Table 1: Properties of polypropylene compositions

| | iHPP/α | iHPP-HMS/β |
|---|---|---|
| $MFR_2$ / g/10 min | 3.3 | 3.3 |
| $T_c$ / °C | 126 | 126 |
| mmmm/% | 97.1 | 97.4 |
| PI/ $Pa^{-1}$ | 5.5 | 6.0 |
| DS / wt% | 1.1 | 1.4 |
| BHT / ppm | 966 | 989 |
| CaSt / ppm | 66 | 73 |
| Irganox 1010 / ppm | 4347 | 4677 |
| Ash/% | 17 | 13 |

PI polydispersity index
DS decaline solubles
BHT butylhydroxytoluene
CaSt Calcium stearate

Table 2: Process conditions and thickness of BOPP films based on iHPP

| | Output / kg/h | Pressure / bar | DR - | $v_{MD, cast}$ / m/min | $d_{cast}$ μm | $v_{inlet}$ / m/min | $v_{outlet}$ / m/min | $d_{BOPP}$ / μm |
|---|---|---|---|---|---|---|---|---|
| α-SEQ5.0×9.0 | 29.7 | 69.3 | 6.0 | 9.9 | 168 | 49.8 | 49.8 | 3.95 |
| HMS/β-SEQ5.0×9.0 | 26.2 | 68.1 | 6.1 | 10 | 165 | 49.9 | 49.8 | 3.84 |
| α-SIM6.5×9.0 | 36.7 | 75.1 | 4.2 | 9.0 | 238 | 8.8 | 58.2 | 3.77 |
| HMS/β-SIM6.5×9.0 | 35.9 | 75.1 | 4.5 | 9.0 | 224 | 8.8 | 58.6 | 3.76 |

DR is the draw ratio of the melt.
$v_{MD, cast}$, $v_{inlet}$, $v_{outlet}$, respectively, are velocities of machine direction to obtain cast film, velocity of inlet and outlet to obtain BOPP film, respectively.
$d_{cast}$ and $d_{BOPP}$ are thicknesses of cast film and BOPP film, respectively.

Figure 1 shows images obtained by scanning electron microscopy of air knife side surfaces of two different films (top: iHPP/α; bottom: iHPP-HMS/β) drawn in machine direction only (draw ratio: 5.0) in three different magnifications.

Figure 2 shows images obtained by scanning electron microscopy of air knife side surfaces of four different films based on two different compositions with drawn in sequential process mode (SEQ) and simultaneously (SIM) machine direction and transverse direction, respectively, in two different magnifications each (two images for each sample). The films in the left block of four images are based on iHPP/α, the films in the right block of four images are based on iHPP-HMS/β. In each block of four images: the left two films SEQ5.0×9.0, the right two films SIM6.5×9.0.

What can be clearly derived from these images is that the drawing only in machine direction as shown in Fig. 1 leads to mechanical failure sites that can especially be seen at the highest magnification for example at the base of the craters.

The same is shown in Figure 2 for the sequential process mode on two different polypropylene compositions. Indeed mechanical failure sites at the base of the rims of the craters or protrusions can again be seen. When orientation in machine direction and transverse direction is, however, applied simultaneously, the craters or protrusions are still present but not the mechanical failure sites at the base thereof.

## Claims

**1.** A biaxially oriented polypropylene film for production in a continuous process comprising a polypropylene composition, wherein the polypropylene composition comprises

(i) from 90 to 99.9 wt%, based on the total weight of the polypropylene composition, of a homopolymer of propylene having a content of isotactic pentad fraction of from 93 to 98 % and a melt flow rate $MFR_2$ of from 0.4 to 10 g/10 min,
and either
(ii) from 0.0000001 to 1 wt%, based on the total weight of the polypropylene composition, of a polymeric $\alpha$-nucleating agent,
or
(iii) from 0.1 to 9.99 wt%, based on the total weight of the polypropylene composition, of a branched propylene polymer having a branching index g' of not more than 0.9,
wherein the film is stretched simultaneously in machine direction and transverse direction in a continuous process, wherein the draw ratio in either transverse direction or machine direction is at least 8.0, and
wherein the biaxially oriented polypropylene film does not comprise mechanical failure sites as determined by scanning electron microscopy according to the present description.

**2.** The biaxially oriented polypropylene film according to claim 1, wherein the polypropylene composition comprises in addition to the homopolymer of propylene (i)

(ii) from 0.0000001 to 1 wt%, based on the total weight of the polypropylene composition, of a polymeric $\alpha$-nucleating agent,
and
(iii) up to 9.99 wt%, based on the total weight of the polypropylene composition, of a propylene homo- or copolymer other than the homopolymer of propylene (i),
or
(ii) from 0.1 to 9.99 wt%, based on the total weight of the polypropylene composition, of a branched propylene polymer having a branching index g' of not more than 0.9,
and
(iii) up to 0.00001 wt%, based on the total weight of the polypropylene composition, of a $\beta$-nucleating agent.

**3.** The biaxially oriented polypropylene film according to claim 1 or 2, wherein the polypropylene composition further comprises
(iv) from 0.01 to 1 wt%, based on the total weight of the polypropylene composition, of conventional additives.

**4.** The biaxially oriented polypropylene film according to any one of claims 1 to 3, wherein the polypropylene composition has an ash content of not more than 30 ppm and/or wherein the draw ratio in either TD or MD is 9.0 to 15.0.

**5.** The biaxially oriented polypropylene film according to any one of claims 1 to 4, wherein the polymeric $\alpha$-nucleating agent is selected from the group consisting of polyvinylcyclohexane, poly(3-methyl-1-butene) and mixtures thereof.

**6.** The biaxially oriented polypropylene film according to any one of claims 1 to 4, wherein the $\beta$-nucleating agent is selected from the group consisting of 5,12-dihydro-quino[2,3-b]acridine-7,14-dione, quino[2,3-b]acridine-6,7,13,14(5H,12H)-tetrone, 5,6,12,13-tetrahydroquino[2,3-b]acridine-7,14-dione, and mixtures thereof.

**7.** The biaxially oriented polypropylene film according to claim 3, wherein the conventional additives are selected from the antioxidants, stabilisers, acid scavengers, and mixtures thereof.

8. The biaxially oriented polypropylene film according to any one of claims 1 to 7, wherein the film comprises a layer consisting of the polypropylene composition and/or the film has a thickness of 3.5 to 4.5 μm and/or the throughput of the continuous process is 20 kg/h to 900 kg/h.

9. The biaxially oriented polypropylene film according to any one of claims 1 to 8, wherein the film also comprises a metal layer.

10. A capacitor comprising an insulation film comprising a layer of the biaxially oriented polypropylene film according to any one of claims 1-9.

11. A process for producing a biaxially oriented polypropylene film in a continuous process comprising the steps of:

(A) providing a polypropylene composition comprising

(i) from 90 to 99.9 wt%, based on the total weight of the polypropylene composition, of a homopolymer of propylene having a content of isotactic pentad fraction of from 93 to 98 % and a melt flow rate $MFR_2$ of from 0.4 to 10 g/10 min,
and either
(ii) from 0.0000001 to 1 wt%, based on the total weight of the polypropylene composition, of a polymeric α-nucleating agent,
or
(ii) from 0.1 to 9.99 wt%, based on the total weight of the polypropylene composition, of a branched propylene polymer having a branching index g' of not more than 0.9,

(B) extruding the polypropylene composition to a flat film,
(C) orienting the flat film simultaneously in the machine direction and in the transverse direction in a continuous process, wherein the draw ratio in either transverse direction or machine direction is at least 8.0, to obtain the biaxially oriented polypropylene film, and
(D) recovering the biaxially oriented polypropylene film.

12. The process according to claim 11, wherein the polypropylene composition comprises in addition to the homopolymer of propylene (i)

(ii) from 0.0000001 to 1 wt%, based on the total weight of the polypropylene composition, of a polymeric α-nucleating agent, and
(iii) up to 9.99 wt%, based on the total weight of the polypropylene composition, of a propylene homo- or copolymer other than the homopolymer of propylene (i),
or
(ii) from 0.1 to 9.99 wt%, based on the total weight of the polypropylene composition, of a branched propylene polymer having a branching index g' of not more than 0.9,
and
(iii) up to 0.00001 wt%, based on the total weight of the polypropylene composition, of a β-nucleating agent.

13. The process according to claim 11 or 12, wherein the polypropylene composition further comprises
(iv) from 0.01 to 1 wt%, based on the total weight of the polypropylene composition, of conventional additives.

14. The process according to any one of claims 11 to 13, wherein the throughput of the continuous process is 20 kg/h to 900 kg/h and/or the draw ratio in either TD or MD is 9.0 to 15.0.

15. The process according to any one of claims 11 to 14, wherein the biaxially oriented polypropylene film does not comprise mechanical failure sites as determined by scanning electron microscopy.

**Patentansprüche**

1. Eine biaxial orientierte Polypropylenfolie zur Herstellung in einem kontinuierlichen Verfahren, umfassend eine Polypropylenzusammensetzung, wobei die Polypropylenzusammensetzung umfasst

(i) 90 bis 99,9 Gew.-%, bezogen auf das Gesamtgewicht der Polypropylenzusammensetzung, eines Homopolymers von Propylen mit einem Gehalt an isotaktischer Pentadfraktion von 93 bis 98 % und einer Schmelzflussrate $MFR_2$ von 0,4 bis 10 g/10 min,
und entweder
(ii) von 0,0000001 bis 1 Gew.-%, bezogen auf das Gesamtgewicht der Polypropylenzusammensetzung, eines polymeren α-Nukleierungsmittels,
oder
(iii) von 0,1 bis 9,99 Gew.-%, bezogen auf das Gesamtgewicht der Polypropylenzusammensetzung, eines verzweigten Propylenpolymers mit einem Verzweigungsindex g' von nicht mehr als 0,9,
wobei die Folie in einem kontinuierlichen Verfahren gleichzeitig in Maschinenrichtung und in Querrichtung gestreckt wird, wobei das Streckverhältnis entweder in Querrichtung oder in Maschinenrichtung mindestens 8,0 beträgt, und
wobei die biaxial orientierte Polypropylenfolie keine mechanischen Bruchstellen aufweist, wie durch Rasterelektronenmikroskopie gemäß der vorliegenden Beschreibung bestimmt.

2. Die biaxial orientierte Polypropylenfolie nach Anspruch 1, wobei die Polypropylenzusammensetzung zusätzlich zu dem Homopolymer von Propylen (i)

(ii) von 0,0000001 bis 1 Gew.-%, bezogen auf das Gesamtgewicht der Polypropylenzusammensetzung, eines polymeren α- Nukleierungsmittels, und
(iii) bis zu 9,99 Gew.-%, bezogen auf das Gesamtgewicht der Polypropylenzusammensetzung, eines Propylenhomo- oder -copolymers, das nicht das Homopolymer von Propylen (i) ist, umfasst,
oder
(ii) von 0,1 bis 9,99 Gew.-%, bezogen auf das Gesamtgewicht der Polypropylenzusammensetzung, eines verzweigten Propylenpolymers mit einem Verzweigungsindex g' von nicht mehr als 0,9, und
(iii) bis zu 0,00001 Gew.-%, bezogen auf das Gesamtgewicht der Polypropylenzusammensetzung, eines β-Nukleierungsmittels umfasst.

3. Die biaxial orientierte Polypropylenfolie nach Anspruch 1 oder 2, wobei die Polypropylenzusammensetzung ferner umfasst
(iv) 0,01 bis 1 Gew.-%, bezogen auf das Gesamtgewicht der Polypropylenzusammensetzung, herkömmliche Additive.

4. Die biaxial orientierte Polypropylenfolie nach einem der Ansprüche 1 bis 3, wobei die Polypropylenzusammensetzung einen Aschegehalt von nicht mehr als 30 ppm aufweist und/oder wobei das Streckverhältnis entweder in TD oder MD 9,0 bis 15,0 beträgt.

5. Die biaxial orientierte Polypropylenfolie nach einem der Ansprüche 1 bis 4, wobei das polymere α- Nukleierungsmittel ausgewählt ist aus der Gruppe bestehend aus Polyvinylcyclohexan, Poly(3-methyl-1-buten) und Mischungen davon.

6. Die biaxial orientierte Polypropylenfolie nach einem der Ansprüche 1 bis 4, wobei das β- Nukleierungsmittel ausgewählt ist aus der Gruppe bestehend aus 5,12-Dihydrochino[2,3-b]acridin-7,14-dion, Chino[2,3-b]acridin-6,7,13,14(5H,12H)-tetron, 5,6,12,13-Tetrahydrochino[2,3-b]acridin-7,14-dion und Mischungen davon.

7. Die biaxial orientierte Polypropylenfolie nach Anspruch 3, wobei die üblichen Additive ausgewählt sind aus Antioxidantien, Stabilisatoren, Säurefängern und deren Mischungen.

8. Die biaxial orientierte Polypropylenfolie nach einem der Ansprüche 1 bis 7, wobei die Folie eine aus der Polypropylenzusammensetzung bestehende Schicht umfasst und/oder die Folie eine Dicke von 3,5 bis 4,5 μm aufweist und/oder der Durchsatz des kontinuierlichen Verfahrens 20 kg/h bis 900 kg/h beträgt.

9. Die biaxial orientierte Polypropylenfolie nach einem der Ansprüche 1 bis 8, wobei die Folie auch eine Metallschicht umfasst.

10. Ein Kondensator mit einer Isolierfolie, die eine Schicht aus der biaxial orientierten Polypropylenfolie nach einem der Ansprüche 1 bis 9 umfasst.

11. Ein Verfahren zur Herstellung einer biaxial orientierten Polypropylenfolie in einem kontinuierlichen Verfahren, das

die folgenden Schritte umfasst:

(A) Bereitstellung einer Polypropylenzusammensetzung, umfassend

(i) 90 bis 99,9 Gew.-%, bezogen auf das Gesamtgewicht der Polypropylenzusammensetzung, eines Homopolymers von Propylen mit einem Gehalt an isotaktischer Pentadfraktion von 93 bis 98 % und einer Schmelzflussrate $MFR_2$ von 0,4 bis 10 g/10 min,
und entweder
(ii) von 0,0000001 bis 1 Gew.-%, bezogen auf das Gesamtgewicht der Polypropylenzusammensetzung, eines polymeren $\alpha$-Nukleierungsmittels,
oder
(ii) von 0,1 bis 9,99 Gew.-%, bezogen auf das Gesamtgewicht der Polypropylenzusammensetzung, eines verzweigten Propylenpolymers mit einem Verzweigungsindex g' von nicht mehr als 0,9,

(B) Extrudieren der Polypropylenzusammensetzung zu einer flachen Folie,
(C) Orientieren der flachen Folie gleichzeitig in der Maschinenrichtung und in der Querrichtung in einem kontinuierlichen Verfahren, wobei das Streckverhältnis entweder in Querrichtung oder in Maschinenrichtung mindestens 8,0 beträgt, um die biaxial orientierte Polypropylenfolie zu erhalten, und
(D) die Zurückgewinnung der biaxial orientierten Polypropylenfolie.

**12.** Das Verfahren nach Anspruch 11, wobei die Polypropylenzusammensetzung zusätzlich zu dem Homopolymer von Propylen (i)

(ii) von 0,0000001 bis 1 Gew.-%, bezogen auf das Gesamtgewicht der Polypropylenzusammensetzung, eines polymeren $\alpha$-Nukleierungsmittels, und
(iii) bis zu 9,99 Gew.-%, bezogen auf das Gesamtgewicht der Polypropylenzusammensetzung, eines Propylenhomo- oder - copolymers, das nicht das Homopolymer von Propylen (i) ist, umfasst,
oder
(ii) von 0,1 bis 9,99 Gew.-%, bezogen auf das Gesamtgewicht der Polypropylenzusammensetzung, eines verzweigten Propylenpolymers mit einem Verzweigungsindex g' von nicht mehr als 0,9,
und
(iii) bis zu 0,00001 Gew.-%, bezogen auf das Gesamtgewicht der Polypropylenzusammensetzung, eines $\beta$-Nukleierungsmittels umfasst.

**13.** Das Verfahren nach Anspruch 11 oder 12, wobei die Polypropylenzusammensetzung ferner umfasst
(iv) 0,01 bis 1 Gew.-%, bezogen auf das Gesamtgewicht der Polypropylenzusammensetzung, herkömmliche Additive.

**14.** Das Verfahren nach einem der Ansprüche 11 bis 13, wobei der Durchsatz des kontinuierlichen Verfahrens 20 kg/h bis 900 kg/h beträgt und/oder das Streckverhältnis entweder in TD oder MD 9,0 bis 15,0 beträgt.

**15.** Das Verfahren nach einem der Ansprüche 11 bis 14, wobei die biaxial orientierte Polypropylenfolie keine durch Rasterelektronenmikroskopie ermittelten mechanischen Bruchstellen aufweist.

## Revendications

**1.** Film de polypropylène à orientation biaxiale pour production dans un processus continu comprenant une composition de polypropylène, dans lequel la composition de polypropylène comprend

(i) de 90 à 99,9 % en poids, sur la base du poids total de la composition de polypropylène, d'un homopolymère de propylène ayant une teneur en fraction pentavalente isotactique de 93 à 98 % et un indice de fusion MFR2 de 0,4 à 10 g/10 minutes,
et
(ii) de 0,0000001 à 1 % en poids, sur la base du poids total de la composition de polypropylène, d'un agent polymère d'$\alpha$-nucléation,
ou
(iii) de 0,1 à 9,99 % en poids, sur la base du poids total de la composition de polypropylène, d'un polymère de

propylène ramifié ayant un indice de ramification g' de pas plus de 0,9,
dans lequel le film est étiré simultanément dans la direction machine et dans une direction transversale dans un processus continu, dans lequel le rapport d'étirage dans la direction transversale ou la direction machine est d'au moins 8,0, et
dans lequel le film de polypropylène à orientation biaxiale ne comprend pas de sites de défaillance mécanique comme déterminé par microscopie électronique à balayage selon la présente description.

2. Film de polypropylène à orientation biaxiale selon la revendication 1, dans lequel la composition de polypropylène comprend en plus de l'homopolymère de propylène

(i)
(ii) de 0,0000001 à 1 % en poids, sur la base du poids total de la composition de polypropylène, d'un agent polymère d'α-nucléation,
et
(iii) jusqu'à 9,99 % en poids, sur la base du poids total de la composition de polypropylène, d'un homo- ou copolymère de propylène autre que l'homopolymère de propylène (i),
ou
(ii) de 0,1 à 9,99 % en poids, sur la base du poids total de la composition de polypropylène,

d'un polymère de propylène ramifié ayant un indice de ramification g' de pas plus de 0,9,
et

(iii) jusqu'à 0,00001 % en poids, sur la base du poids total de la composition de polypropylène, d'un agent de β-nucléation.

3. Film de polypropylène à orientation biaxiale selon la revendication 1 ou 2, dans lequel la composition de polypropylène comprend en outre
(iv) de 0,01 à 1 % en poids, sur la base du poids total de la composition de polypropylène, d'additifs classiques.

4. Film de polypropylène à orientation biaxiale selon l'une des revendications 1 à 3, dans lequel la composition de polypropylène a une teneur en cendres de pas plus de 30 ppm et/ou dans lequel le rapport d'étirage dans la TD ou MD est de 9,0 à 15,0.

5. Film de polypropylène à orientation biaxiale selon l'une des revendications 1 à 4, dans lequel l'agent polymère d'α-nucléation est sélectionné parmi le groupe constitué de polyvinylcyclohexane, poly(3-méthyl-1-butène) et de mélanges de ceux-ci.

6. Film de polypropylène à orientation biaxiale selon l'une des revendications 1 à 4, dans lequel l'agent de β-nucléation est sélectionné parmi le groupe constitué de 5,12-dihydro-quino[2,3-b]acridine-7,14-dione, quino[2,3-b]acridine-6,7,13,14(5H, 12H)-tétrone, 5,6,12,13-tétrahydroquino[2,3-b]acridine-7,14-dione, et de mélanges de ceux-ci.

7. Film de polypropylène à orientation biaxiale selon la revendication 3, dans lequel les additifs classiques sont sélectionnés parmi les antioxydants, stabilisants, capteurs d'acide, et des mélanges de ceux-ci.

8. Film de polypropylène à orientation biaxiale selon l'une des revendications 1 à 7, dans lequel le film comprend une couche constituée de la composition de polypropylène et/ou le film a une épaisseur de 3,5 à 4,5 μm et/ou le débit du processus continu est de 20 kg/h à 900 kg/h.

9. Film de polypropylène à orientation biaxiale selon l'une des revendications 1 à 8, dans lequel le film comprend également une couche métallique.

10. Condensateur comprenant un film isolant comprenant une couche du film de polypropylène à orientation biaxiale selon l'une des revendications 1 à 9.

11. Processus pour produire un film de polypropylène à orientation biaxiale dans un processus continu comprenant les étapes consistant à :

(A) fournir une composition de polypropylène comprenant

(i) de 90 à 99,9 % en poids, sur la base du poids total de la composition de polypropylène, d'un homopolymère de propylène ayant une teneur en fraction pentavalente isotactique de 93 à 98 % et un indice de fusion MFR2 de 0,4 à 10 g/10 minutes,
et
(ii) de 0,0000001 à 1 % en poids, sur la base du poids total de la composition de polypropylène, d'un agent polymère d'$\alpha$-nucléation,
ou
(ii) de 0,1 à 9,99 % en poids, sur la base du poids total de la composition de polypropylène, d'un polymère de propylène ramifié ayant un indice de ramification g' de pas plus de 0,9,

(B) extruder la composition de polypropylène en un film plat,
(C) orienter le film plat simultanément dans la direction machine et dans la direction transversale dans un processus continu, dans lequel le rapport d'étirage dans la direction transversale ou dans la direction machine est d'au moins 8,0, pour obtenir le film de polypropylène à orientation biaxiale, et
(D) récupérer le film de polypropylène à orientation biaxiale.

**12.** Processus selon la revendication 11, dans lequel la composition de polypropylène comprend en plus de l'homopolymère de propylène (i)

(ii) de 0,0000001 à 1 % en poids, sur la base du poids total de la composition de polypropylène, d'un agent polymère d'$\alpha$-nucléation, et
(iii) jusqu'à 9,99 % en poids, sur la base du poids total de la composition de polypropylène, d'un homo- ou copolymère de propylène autre que l'homopolymère de propylène (i),
ou
(ii) de 0,1 à 9,99 % en poids, sur la base du poids total de la composition de polypropylène, d'un polymère de propylène ramifié ayant un indice de ramification g' de pas plus de 0,9,
et
(iii) jusqu'à 0,00001 % en poids, sur la base du poids total de la composition de polypropylène, d'un agent de $\beta$-nucléation.

**13.** Processus selon la revendication 11 ou 12, dans lequel la composition de polypropylène comprend en outre
(iv) de 0,01 à 1 % en poids, sur la base du poids total de la composition de polypropylène, d'additifs classiques.

**14.** Processus selon l'une des revendications 11 à 13, dans lequel le débit du processus continu est de 20 kg/h à 900 kg/h et/ou le rapport d'étirage dans la TD ou MD est de 9,0 à 15,0.

**15.** Processus selon l'une des revendications 11 à 14, dans lequel le film de polypropylène à orientation biaxiale ne comprend pas de sites de défaillance mécanique comme déterminé par microscopie électronique à balayage.

Figure 1

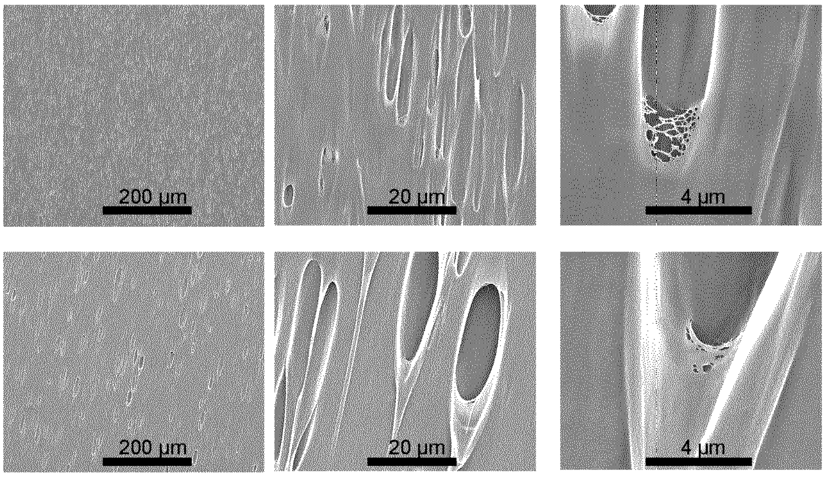


Figure 2

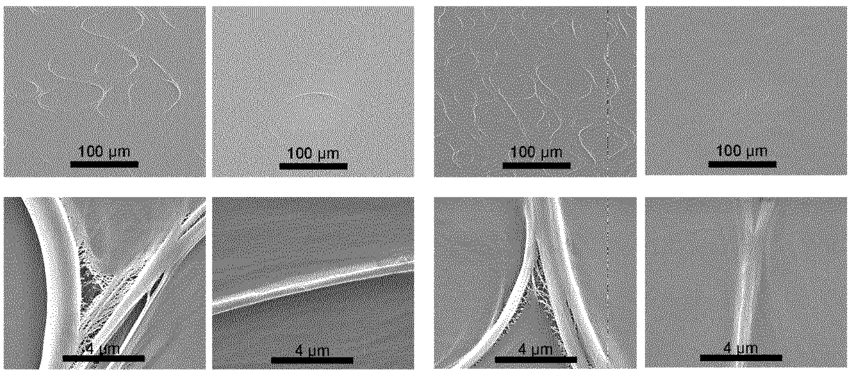

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2995641 A1
- WO 2017064224 A1
- EP 2543684 A
- EP 607703 A
- EP 1028984 A
- EP 1028985 A
- EP 1030878 A
- WO 9924479 A
- WO 0068315 A
- EP 1801157 A
- EP 1801155 A
- EP 1818365 A
- EP 1892264 A
- EP 0879830 A1
- EP 0574801 A
- EP 0574804 A
- EP 0190889 A2
- EP 0384431 A2
- EP 0142724 A2
- EP 0678527 A
- EP 0688817 A
- EP 0450342 A
- EP 177961 A
- EP 682066 A
- WO 2017064224 A


### Non-patent literature cited in the description


- **FUJIYAMA M. et al.** *Journal of Applied Polymer Science,* 1988, vol. 36, 995-1009
- **NIE H.Y. ; WALZAK M.J. ; MCINTYRE N.S.** *Journal of Material Engineering and Performance,* 2004, vol. 13, 451-460
- **TAMURA S. et al.** *Journal of Applied Polymer Science,* 2012, vol. 124, 2725-2735
- **NASH J.L.** *Polymer Engineering and Science,* 1988, vol. 28, 826-870
- **HO J. ; LOW T.R. ; BOGGS S.** *IEEE Electrical Insulation Magazine,* 2010, vol. 26, 20-26
- **B.H. ZIMM ; W.H. STOCKMEYER.** *J. Chem. Phys.,* 1949, vol. 17, 1301
- *CHEMICAL ABSTRACTS,* 1047-16-1
- *CHEMICAL ABSTRACTS,* 1503-48-6
- *CHEMICAL ABSTRACTS,* 5862-38-4
- *CHEMICAL ABSTRACTS,* 153250-52-3
- *CHEMICAL ABSTRACTS,* 19455-79-9
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. WINNIFORD.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **M. H. WAGNER.** Rheotens-Mastercurves and Drawability of Polymer Melts. *Polymer Engineering and Sience,* vol. 36, 925-935